# EUROPEAN PATENT SPECIFICATION

(11) **EP 3 341 659 B1**
(45) Date of publication and mention of the grant of the patent: **07.07.2021**
(21) Application number: 16753423.9
(22) Date of filing: 10.08.2016
(51) Int. Cl.: F24S 10/95, F28F 13/06

(54) **ATTACHMENT DEVICE FOR A HEATING APPARATUS**
BEFESTIGUNGSVORRICHTUNG FÜR EIN HEIZGERÄT
DISPOSITIF DE FIXATION POUR UN APPAREIL DE CHAUFFAGE

(30) Priority: 27.08.2015 GB 201515226
(43) Date of publication of application: 04.07.2018
(73) Proprietor: Soltropy Limited, Clarkston Glasgow G76 8EP (GB)
(72) Inventor: SPEAKE, Stuart, Clarkston Glasgow G76 8EP (GB)
(74) Representative: Lawrie IP Limited
(86) International application number: PCT/GB2016/052487
(87) International publication number: WO 2017/032976

(56) References cited:
- EP-A1- 2 741 025
- CN-U- 201 983 484
- CN-U- 202 470 510
- DE-A1- 4 120 692
- DE-A1-102011 119 403
- DE-U1- 9 400 960
- GB-A- 2 095 393
- GB-A- 2 510 063
- JP-A- S60 108 643
- US-A1- 2008 209 907
- US-A1- 2013 228 164

## Description

The present invention relates to an improved attachment device for a heating apparatus, a fluid heating system using the same and a method of installing the same fluid heating system.

Fluid heating systems, and in particular, fluid heating systems using solar thermal panels, are used to heat fluid from solar radiation. The solar panel typically includes a manifold through which fluid to be heated passes. The heat source members are thermally connected to the manifold to transfer heat thereto. The heated fluid is then pumped through a fluid storage tank to heat the fluid therein. Alternatively, the heated fluid is pumped through another heat storage device, such as a heat battery. The heated fluid is not mixed with the fluid in the storage tank and requires a heat exchanger component to be installed in the tank. The cooler fluid is then recirculated back through the manifold to be reheated.

In some known systems the tip portion of the heat source members are slotted into engagement with the manifold.

While this arrangement does transfer heat from the heat source members to the manifold and the fluid flowing therethrough, the thermal connection between the tips of the heat source members and the manifold is not optimum, since the manifold must provide some clearance between the manifold and the tip of the heat source member to allow the tip of the heat source member to be slotted into the manifold.

EP 2741025 discloses an attachment device for a heating apparatus. The attachment device includes a housing having a through bore configured to allow a fluid conduit to pass through the housing. The attachment device includes a heat source member receiving section configured to receive a portion of a heat source member, and a thermal connection member that is engagable with both a fluid conduit passing through the housing and a portion of a heat source member located within the housing.

GB 2510063 discloses an attachment system for a heating apparatus comprising a housing, the housing having a through bore, the through bore being configured to allow a fluid conduit to pass through the housing. The housing includes a heat source member receiving section configured to receive at least a portion of a heat source member therein, and a thermal connection member that is engagable with both a fluid conduit and a portion of a heat source member located within the housing.

The present inventor has appreciated the shortcomings in the above-described apparatus and systems.

According to a first aspect of the present invention there is provided an attachment device for a heating apparatus comprising:
a housing, the housing having a through bore, the through bore being configured to allow a fluid conduit to pass through the housing, and a heat source member receiving section, the heat source member receiving section being configured to receive at least a portion of a heat source member therein; and
a thermal connection member, the thermal connection member being arranged such that, in use, the thermal connection member is engagable with both the fluid conduit passing through the housing and at least a portion of the heat source member located within the housing
wherein the housing is formed from at least two pieces and the housing includes a locking member that locks each piece of the housing together; and
wherein the locking member is operable to bias the thermal connection member into engagement with the fluid conduit and/or the heat source member.

The heating apparatus may be a solar heating apparatus. The heating apparatus may be a solar panel heating apparatus. The heat source member may be a solar heat tube.

The housing may have a longitudinal axis.

The heat source member receiving section may be configured to receive a substantially elongate section of a heat source member. The heat source member receiving section may be configured to receive a substantially elongate, cylindrical section of a heat source member. The heat source member receiving section may have a substantially elongate portion configured to receive a substantially elongate portion of a heat source member therein. The heat source member receiving section may have a substantially elongate, cylindrical portion configured to receive a substantially elongate, cylindrical portion of a heat source member therein.

The heat source member receiving section may be arranged to receive at least a tip portion of a heat source member.

The heat source member receiving section may be arranged to receive at least a portion of a solar heat tube. The heat source member receiving section may be arranged to receive at least a portion of a tip portion of a solar heat tube.

The heat source member receiving section may be arranged in the direction of the longitudinal axis of the housing.

The through bore of the housing may be arranged in a direction perpendicular to the longitudinal axis of the housing. The through bore of the housing may be transversely arranged with respect to the heat source member receiving section.

The housing may have an upper section and a lower section. The upper section and the lower section of the housing may be substantially cylindrical. The through bore may be arranged with the upper section of the housing and the heat source member receiving section may be arranged with the lower section of the housing.

The through bore may be substantially cylindrical. Alternatively, the through bore may be substantially cuboid-shaped.

The heat source member receiving section may be configured to releasably secure the at least a portion of a heat source member therein.

The housing may be a two-piece member. The housing may be substantially symmetrical about a plane that lies on the longitudinal axis of the housing. Each piece of the housing may be substantially identical in shape.

Each piece of the housing may be releasably attachable to one another.

The locking member may include a locking collar that threads onto an outer surface of the housing.

The locking member may be operable to exert a force on the thermal connection member to force the thermal engagement member into engagement with the fluid conduit and/or the heat source member.

The locking member may be operable to move from a first position in which the locking member does not exert a bias or force upon the thermal connection member to a second position in which the locking member does exert a bias or force upon the thermal connection member.

The locking member may include a screw member that engages with a thread on the housing. The locking member may include a cam device, the cam device being operable to move the locking member from the first position to the second position.

The two pieces of the housing may be pivotably connectable to each other. Each piece of the housing may include one part of a hinge member. Each part of the hinge member being configured to allow the two pieces of the housing to be hinged together, or pivotably connected.

The hinge member may be a clip hinge. That is a first part of the clip hinge on one of the parts of the housing may clip into engagement with a second part of the clip hinge on the other part of the housing.

The two pieces of the housing may be pivotably connected at the upper section of the housing.

The hinge member may be located at the upper section of the housing.

The housing may include a frame member attachment portion. The frame member attachment portion may be configured to allow the housing to be connectable to a structural component of a frame member. The frame member attachment portion may be configured to allow the housing to be snapped into engagement with the frame member. This may be an interference fit. The frame member attachment portion may be a clip member that allows the housing to clip onto the frame member. The frame member attachment portion may be resilient. The frame member attachment portion may be located on the rear of the housing.

The housing may include at least one housing attachment portion. The housing attachment portion being configured to allow the housing to be releasably attachable to an adjacent housing of another attachment device. The housing attachment portion may be located on a side portion of the housing.

The housing may include two housing attachment portions, located on either side portion of the housing. Each housing attachment portion being configured to allow the housing to be releasably attachable to an adjacent housing of another attachment device. The housing attachment portion, or portions, may be configured to allow the housing to be snapped into engagement with the adjacent housing. This may be an interference fit. The housing attachment portion, or portions, may be a clip member that allows the housing to clip onto the adjacent housing.

The housing attachment portion, or portions, may be resilient.

The housing may be made from a plastics material. The housing may be made from a thermoplastic material, polyamide 66 (PA66), nylon, acrylonitrile butadiene styrene (ABS), polyether ether ketone (PEEK), polyoxymethylene (POM), polycarbonate, polyethylene, glass reinforced plastic (GRP), metal, stainless steel, galvanised steel, rubber, or silicone rubber. The thermoplastic material may be glass-filled, this may be filled with 30% glass.

The thermal connection member is located within the housing.

The thermal connection member may be configured to provide a thermal path between a heat source member located in the heat source member receiving section and a fluid conduit located in the through bore.

The thermal connection member may be configured such that it may be in direct contact with the fluid conduit.

The thermal connection member may be configured to receive a substantially elongate section of a heat source member. The thermal connection member may be configured to receive a substantially elongate, cylindrical section of a heat source member. The thermal connection member may have a substantially elongate portion configured to receive a substantially elongate portion of a heat source member therein. The thermal connection member may have a substantially elongate, cylindrical portion configured to receive a substantially elongate, cylindrical portion of a heat source member therein.

The thermal connection member may be arranged to receive at least a tip portion of a heat source member.

The thermal connection member may be arranged to receive at least a portion of a solar heat tube. The thermal connection member may be arranged to receive at least a portion of a tip portion of a solar heat tube. The thermal connection member may be integrally formed with the heat source member. The thermal connection member may be integrally formed with the tip portion of a solar heat tube. In this arrangement the thermal connection member may be a one piece unit that at least partially surrounds the fluid conduit.

The thermal connection member may be configured to receive a fluid conduit. The thermal connection member may be configured to receive a substantially cylindrical fluid conduit. The thermal connection member may be configured to receive a substantially cuboid-shaped fluid conduit. The thermal connection member may have a substantially elongate portion configured to receive a fluid conduit therein. The thermal connection member may have a substantially elongate, cylindrical portion configured to receive a substantially cylindrical fluid conduit therein.

The thermal connection member may have a fluid conduit engagement portion and a heat source member engagement portion. The thermal connection member may be substantially T-shaped with the fluid conduit engagement portion and the heat source member engagement portion being arranged substantially perpendicular to one another.

The fluid conduit engagement portion may be substantially cylindrical in shape. The heat source member engagement portion may be substantially cylindrical in shape. The fluid conduit engagement portion and the heat source member engagement portion may be substantially cylindrical in shape.

The fluid conduit engagement portion may be substantially complimentary in shape to the fluid conduit. The heat source member engagement portion may be substantially complimentary in shape to the heat source member.

The fluid conduit may be an enclosed conduit. The fluid conduit may be a pipe. The fluid conduit may be a 22mm diameter cylindrical pipe. The fluid conduit may be a 22mm diameter cylindrical copper pipe.

The thermal connection member may be a one-piece member. The thermal connection member may be biased towards the fluid conduit. Alternatively, the thermal connection member may be a two-piece member. The thermal connection member may be substantially symmetrical about a plane that lies on the longitudinal axis of the housing/ thermal connection member. Each piece of the thermal connection member may be substantially identical in shape.

The two pieces of the thermal connection member may be biased towards one another.

The thermal connection member may be made from a metal material. The thermal connection member may be made from metal. The metal may be aluminium, copper, copper alloys, silver, gold, or the like.

The thermal connection member may be arranged such that it is biased into engagement with a fluid conduit and/or a heat source member.

The attachment device may further comprise a biasing device to bias the thermal connection member into engagement with a fluid conduit and/or a heat source member.

The biasing device may include a mechanical biasing device. The mechanical biasing device may include one or more spring members or devices. The mechanical biasing device may be located between the housing and the thermal connection member and may be configured to exert a bias force on the thermal connection member to force the thermal connection member into contact with a fluid conduit and/or a heat source member.

The biasing device may include a resilient member. The resilient member may be located between the housing and the thermal connection member and may be configured to exert a bias force on the thermal connection member to force the thermal connection member into contact with a fluid conduit and/or a heat source member.

The resilient member may be made from a rubber material. The resilient member may be made from rubber, silicone rubber, silicone rubber filled with high temperature insulating materials, such as perlite, vermiculite, glass fibre, mineral wool or the like, or metals such as aluminium, aluminium foam, steel, moulded perlite, moulded vermiculite, mineral wool, moulded mineral wool, compressed mineral wool, glass fibre, moulded glass fibre, a ceramic, glass, a phase change material encapsulated in a medium such as silicone rubber or cement, or a phase change material in a silicone rubber enclosure, or polytetrafluoroethylene (PTFE).

The resilient member may substantially surround the thermal connection member. The resilient member may occupy a significant portion of the internal volume of the housing.

The resilient member may be a one-piece member. Alternatively, the resilient member may be a two-piece member. The resilient member may be substantially symmetrical about a plane that lies on the longitudinal axis of the housing. Each piece of the resilient member may be substantially identical in shape.

The resilient member may also function has an insulating member. The attachment device may further comprise an insulating member. The insulating member being arranged to substantially surround the thermal connection member.

The thermal connection member may be configured to be disengagable from a fluid conduit and/or a heat source member. The thermal connection member may be configured to be engagable and disengagable from a fluid conduit and/or a heat source member. The thermal connection member may be configured to be moveable between a first position in which the thermal connection member may engage and be in contact with a fluid conduit and/or a heat source member, and a second position in which the thermal connection member may be disengaged from and out of contact with a fluid conduit and/or a heat source member. The thermal connection member may be selectively engagable with a fluid conduit and/or a heat source member.

The attachment device may further comprise a thermal connection member engagement/disengagement device. The thermal connection member engagement/disengagement device may be operable to move the thermal connection member between the first position and the second position.

Operation of the thermal connection member engagement/disengagement device may be manual or automated. The thermal connection member engagement/disengagement device may be electronically controlled. The attachment device may further comprise a temperature recording device located in the vicinity of the thermal connection member. The thermal connection member engagement/disengagement device may be configured to automatically move the thermal connection member to the second position once a predetermined temperature has been recorded by the temperature recording device.

According to a second aspect of the present invention there is provided an attachment system for a heating apparatus comprising:
two or more attachment devices, each attachment device comprising:
a housing, the housing having a through bore, the through bore being configured to allow a fluid conduit to pass through the housing, and a heat source member receiving section, the heat source member receiving section being configured to receive at least a portion of a heat source member therein; and
a thermal connection member, the thermal connection member being arranged such that, in use, the thermal connection member is engagable with both the fluid conduit passing through the housing and at least a portion of the heat source member located within the housing;
wherein the housing is formed from at least two pieces and the housing includes a locking member that locks each piece of the housing together; and
wherein the locking member is operable to bias the thermal connection member into engagement with the fluid conduit and/or the heat source member.

Each attachment device may be connected to one another via the housing attachment portions.

The attachment system may further comprise a frame member, the frame member being configured to be attachable to a building, or the like, and the attachment devices are attached to a structural component of the frame member via the frame member attachment portions. The frame may be a free-standing structure. That is, the frame member may be configured to be a stand-alone device. The frame member being configured to provide support to the attachment devices and heat source members, when used.

The attachment system may further comprise one or more further attachment devices, the one or more further attachment devices being configured to receive and secure a lower portion, opposite from its tip portion, of a heat source member to a structural component of the frame member. Each further attachment device may include a frame member attachment portion as described above.

The attachment system may comprise a plurality of heat source members, each heat source member being attached to an attachment device.

According to a third aspect of the invention there is provided a fluid heating system comprising:
a fluid storage tank, or heat storage device;
a fluid pump; and
a heating apparatus comprising:
   an attachment system comprising:
      at least one attachment device for a heating apparatus comprising:
      a housing, the housing having a through bore, the through bore being configured to allow a fluid conduit to pass through the housing, and a heat source member receiving section, the heat source member receiving section being configured to receive at least a portion of a heat source member therein; and
      a thermal connection member, the thermal connection member being arranged such that, in use, the thermal connection member is engagable with both the fluid conduit passing through the housing and at least a portion of the heat source member located within the housing;
      wherein the housing is formed from at least two pieces and the housing includes a locking member that locks each piece of the housing together; and
      wherein the locking member is operable to bias the thermal connection member into engagement with the fluid conduit and/or the heat source member; and a frame member, wherein the at least one attachment device is attached to the frame member;
   a fluid conduit located in the through bore of the at least one attachment device; and
   at least one heat source member, the heat source member being attached to an attachment device, such that in use, heat generated by the heat source member is transferred to
   the fluid conduit;
wherein the fluid conduit is in connection with the fluid storage tank, or heat storage device, and
   wherein the fluid pump is connected between the fluid storage tank, or heat storage device, and the heating apparatus and is operable to circulate fluid between the fluid storage tank, or heat storage device, and the heating apparatus.

The fluid may be water. The fluid may be anti-freeze. The fluid may be a mixture of water and anti-freeze.

The frame may be a free-standing structure. That is, the frame member may be configured to be a stand-alone device.

The heat storage device may be a heat battery, or the like.

The heating apparatus may comprise a plurality of attachment devices, wherein each attachment device is attached to the frame member. Each attachment device may be connected to one another via the housing attachment portions.

The heating apparatus may comprise a plurality of heat source members, each heat source member being attached to an attachment device.

The attachment system may further comprise one or more further attachment devices, the one or more further attachment devices being configured to receive and secure a lower portion, opposite from its tip portion, of a heat source member to a structural component of the frame member. Each further attachment device may include a frame member attachment portion as described above in relation to the first aspect of the invention.

According to a fourth aspect of the present invention there is provided a method of installing a fluid heater system comprising the steps of:
providing a fluid storage tank, or heat storage device, a fluid pump, and a heating apparatus, the heating apparatus comprising:
   an attachment system comprising:
      at least one attachment device for a heating apparatus comprising:
         a housing, the housing having a through bore, the through bore being configured to allow a fluid conduit to pass through the housing, and
      a heat source member receiving section, the heat source member receiving section being configured to receive at least a portion of a heat source member therein; and
      a thermal connection member, the thermal connection member being arranged such that, in use, the thermal connection member is engagable with both a fluid conduit passing through the housing and at least a portion of a heat source member located within the housing;
      wherein the housing is formed from at least two pieces and the housing includes a locking member that locks each piece of the housing together; and
      wherein the locking member is operable to bias the thermal connection member into engagement with the fluid conduit and/or the heat source member; and a frame member, wherein the at least one attachment device is attached to the frame member;
   a fluid conduit located in the through bore of the at least one attachment device; and
   at least one heat source member, the heat source member being attached to an attachment device, such that in use, heat generated by the heat source member is transferred to the fluid conduit;
connecting the fluid conduit to the fluid storage tank, or heat storage device; and
connecting the fluid pump between the fluid storage tank, or heat storage device, and the heating apparatus, such that the fluid pump is operable to circulate fluid between the fluid storage tank, or heat storage device, and the heating apparatus.

The fluid may be water. The fluid may be anti-freeze. The fluid may be a mixture of water and anti-freeze.

The frame may be a free-standing structure. That is, the frame member may be configured to be a stand-alone device.

The heat storage device may be a heat battery, or the like.

### Brief description of the drawings

Embodiments of the invention will now be described, by way of example, with reference to the drawings, in which:
Figs. 1a and 1b are perspective views of one form of an attachment device for a heating apparatus according to the present invention;
Fig. 2 is an exploded view of the attachment device of Fig.1;
Fig. 3 is an alternative frame member for the attachment device of Fig. 1;
Fig. 4 is a perspective view of one form of a heating apparatus according to the present invention;
Fig. 5 is the reverse view of Fig. 4;
Fig. 6 is a perspective view of a further attachment device of the present invention; and
Fig. 7 is a fluid heating system according to the present invention.

### Description of preferred embodiments

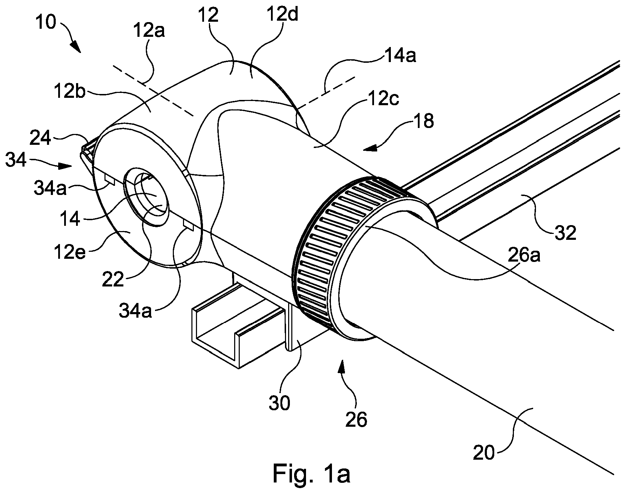

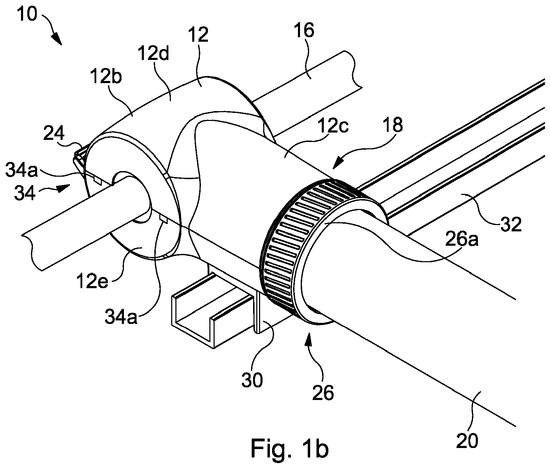

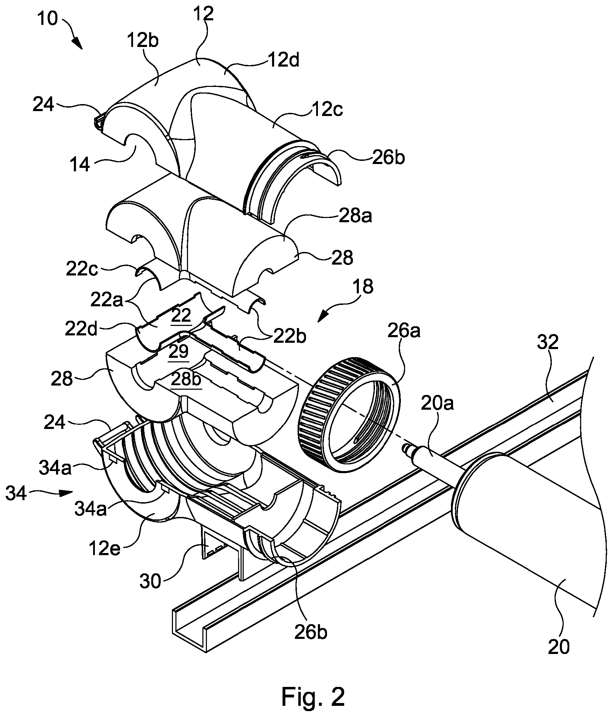

Figs. 1 and 2 illustrate an attachment device 10 for a heating apparatus 100. In the embodiment illustrated and described here the heating apparatus is a solar panel/tube heating apparatus.

The attachment device 10 includes a housing 12. The housing 12 includes a through bore 14, the through bore 14 being configured to allow a fluid conduit 16 to pass through the housing 12, as illustrated in Fig. 1b. The housing 12 also includes a heat source member receiving section 18, the heat source member receiving section 18 being configured to receive at least a portion of a heat source member 20 therein.

The attachment device 10 also includes a thermal connection member 22, the thermal connection member 22 being arranged such that, in use, the thermal connection member 22 is engagable with both the fluid conduit 16 passing through the housing 12 and at least a portion of a heat source member 20 located within the housing 12.

The housing 12 of the attachment device 10 has a longitudinal axis 12a.

The heat source member receiving section 18 is configured to receive a substantially elongate section of the heat source member 20 therein. As illustrated in Fig. 2, the heat source member receiving section 18 is configured to receive a tip portion 20a of the heat source member 20. In the embodiment illustrated and described here the tip section 20a of the heat source member 20 is substantially elongate and cylindrical. Also, the heat source member 20 in the embodiment illustrated and described here is a solar heat tube, as is known in the field of solar panel heating. It should be appreciated however that other types of heat source members may be used with the present invention.

As best illustrated in Fig. 2, the heat source member 20 is generally aligned in the direction of the longitudinal axis 12a of the housing 12 and the through bore 14 is generally aligned to be perpendicular to the longitudinal axis 12a of the housing 12. The through bore 14 is therefore transversely arranged with respect to the heat source member 20. The through bore 14 may have a longitudinal axis 14a, which is substantially perpendicular to the longitudinal axis 12a of the housing 12.

As illustrated in Figs. 1a, 1b and 2, the housing 12 has an upper section 12b and a lower section 12c. The upper section 12b houses the fluid conduit 16 and the lower section 12c houses the heat source member 20. The upper section 12b and the lower section 12c are both generally cylindrical in shape. The housing may be made from polyamide 66 (PA66).

In the embodiment illustrated and described here the through bore 14 and the fluid conduit 16 are both substantially cylindrical. The fluid conduit 16 may be a standard 22mm diameter copper pipe. However, it should be appreciated that the through bore and fluid conduit may be other shapes, such as cuboid-shaped.

In the embodiment illustrated and described here the housing 12 is a two-piece member. The housing 12 has a first portion 12d and a second portion 12e. The housing 12 may be substantially symmetrical about a plane that lies on the longitudinal axis 12a of the housing 12. The first portion 12d and the second portion 12e may be substantially identical in shape.

As best illustrated in Fig. 1a, the first portion 12d and the second portion 12e of the housing 12 are releasably attachable to one another. In the embodiment illustrated and described here the first portion 12d and the second portion 12e of the housing 12 are pivotably connected via a hinge member 24. The hinge member 24 may be a clip hinge and may be arranged such that the first portion 12d and the second portion 12e of the housing 12 snap fit into engagement with one another. The hinge member 24 is located at the upper section 12b of the housing 12.

It will therefore be appreciated that the first portion 12d and the second portion 12e of the housing 12 are pivotably connected and are arranged to allow the attachment device to be attached to the fluid conduit 16 by clamping the attachment device around the fluid conduit 16.

As best illustrated in Fig. 2, the attachment device 10 includes a locking member 26. The locking member 26 is operable to lock the first portion 12d and the second portion 12e of the housing 12 together. However, the locking member 26 is also operable to exert a force on the first portion 12d and the second portion 12e of the housing 12 to bias the two portions towards one another.

In the embodiment illustrated and described here the locking member 26 includes a collar member 26a that threads into engagement with a threaded portion 26b of the housing 12. As the collar member 26a is threaded onto the housing 12 the first portion 12d and the second portion 12e of the housing 12 are progressively moved towards one another.

As illustrated in Figs. 1a and 2, the thermal connection member 22 is located within the housing 12. The thermal connection member 22 is configured to provide a thermal path between the tip portion 20a of the heat source member 20 located in the heat source member receiving section 18 and the fluid conduit 16 located in the through bore 14. The thermal connection member 22 is made from metal. In the embodiment illustrated and described here the thermal connection member 22 is made from copper. However, it should be appreciated that the thermal connection member 22 may be made from any suitable material that has a sufficient heat transfer capability. Other materials may be aluminium, copper alloys, silver, gold, or the like.

The thermal connection member 22 is configured to be complimentary in shape to the fluid conduit 16 and the tip portion 20a of the heat source member 20. The thermal connection member 22 is therefore configured to receive the tip portion 20a of the heat source member 20 and the fluid conduit 16. In this regard, the thermal connection member 22 has a fluid conduit engagement portion 22a and a heat source member engagement portion 22b. The thermal connection member 22 is arranged to be in-line with the through bore 14 and the heat source member receiving section 18. The thermal connection member 22 is therefore substantially T-shaped with the fluid conduit engagement portion 22a and the heat source member engagement portion 22b being arranged substantially perpendicular to one another. The fluid conduit engagement portion 22a and the heat source member engagement portion 22b are substantially cylindrical in shape. In certain embodiments the thermal connection member 22 may be integrally formed with the tip portion 20a of the heat source member 20.

As described above, the fluid conduit 16 is a standard 22mm diameter copper pipe.

As illustrated in Fig. 1a, the thermal connection member 22 is a two-piece member. The thermal connection member 22 is substantially symmetrical about a plane that lies on the longitudinal axis 12a of the housing 12/ heat source member engagement portion 22b. The thermal connection member 22 therefore has a first portion 22c and a second portion 22d. Each piece of the thermal connection member 22c, 22d is substantially identical in shape.

As described above, the thermal connection member 22 is arranged such that it is engagable with the fluid conduit 16 and the heat source member 20.

In the embodiment illustrated and described here the attachment device 10 includes a resilient member 28 (an example of a biasing device and an insulating member). The resilient member 28 is mounted between the housing 12 and the thermal connection member 22. That is, the resilient member 28 surrounds the thermal connection member 22. The resilient member 28 is configured to receive the thermal connection member 22 therein. The resilient member 28 therefore includes a cut out portion 29 that is substantially complementary in shape to the thermal connection member 22. The resilient member 28 is sized and arranged such that it biases the thermal connection member 22 into engagement with the fluid conduit 16 and the heat source member 20. This occurs when the first portion 12d and the second portion 12e of the housing 12 are clamped together with the locking member 26. The resilient member 28 may be "oversized" for the volume in which it fits in the housing.

As illustrated in Fig. 2, the resilient member 28 is a two-piece member. The resilient member 28 is substantially symmetrical about a plane that lies on the longitudinal axis 12a of the housing 12. The resilient member 28 therefore has a first portion 28a and a second portion 28b. Each piece of the resilient member 28a, 28b is substantially identical in shape.

In the embodiment illustrated and described here the resilient member 28 is made from rubber. However, it should be appreciated that the resilient member 28 may be made from any suitable material that has sufficient resilience to allow the thermal connection member 22 to be biased towards the fluid conduit 16 and the heat source member 20. Other materials may be silicone rubber, silicone rubber filled with high temperature insulating materials, such as perlite, vermiculite, glass fibre, mineral wool, or the like, or metals such as aluminium, aluminium foam, steel, moulded perlite, moulded vermiculite, mineral wool, moulded mineral wool, compressed mineral wool, glass fibre, moulded glass fibre, a ceramic, glass, a phase change material encapsulated in a medium such as silicone rubber or cement, or a phase change material in a silicone rubber enclosure, or polytetrafluoroethylene (PTFE).

The resilient member 28 also functions as an insulating member to prevent unwanted heat loss from the thermal connection member 22.

With reference to Figs. 1a, 1b, 3 and 5, the housing 12 includes a frame member attachment portion 30. The frame member attachment portion 30 is configured to allow the housing 12 to be connectable to a structural component of a frame member 32. The frame member attachment portion 30 is configured to allow the housing 12 to be snapped into engagement with the frame member 32. This may be an interference fit. The frame member attachment portion 30 may be a clip member that allows the housing to clip onto the frame member 32. The frame member attachment portion 30 may be resilient. The frame member attachment portion 30 is located on the rear of the housing 12.

The housing 12 may also include housing attachment portions 34. The housing attachment portions 34 being configured to allow the housing 12 to be releasably attachable to an adjacent housing 12 of another attachment device 10. The housing attachment portions 34 are located on a side portion of the housing 12.

The housing attachment portions 34 are configured to allow the housing 12 to be snapped into engagement with the adjacent housing 12. This may be an interference fit. The housing attachment portions 34 are clip members 34a that allows the housing 12 to clip onto the adjacent housing 12. The clip members 34a are resilient.

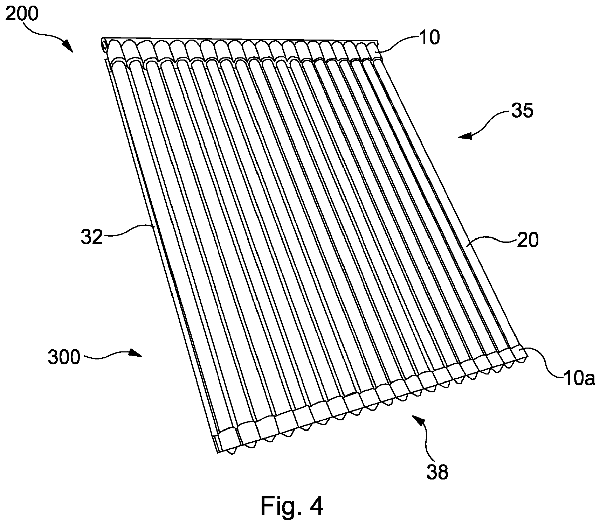

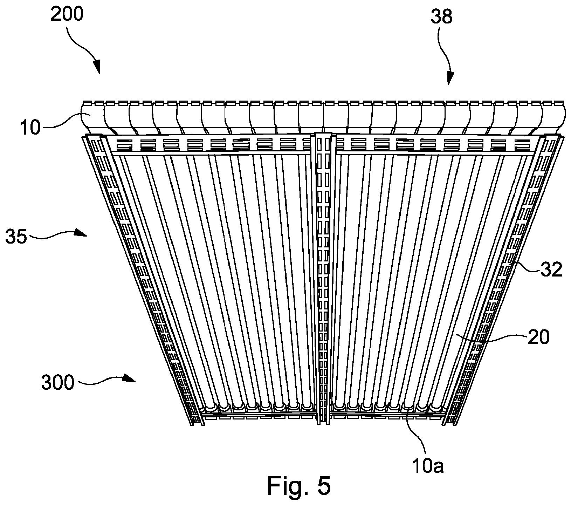

Such an arrangement of attachment devices (including heat source members 20 and frame member 32) is illustrated in Figs. 4 and 5. Fig.4 illustrates an attachment system 200 and a heating apparatus 300 in accordance with the present invention.

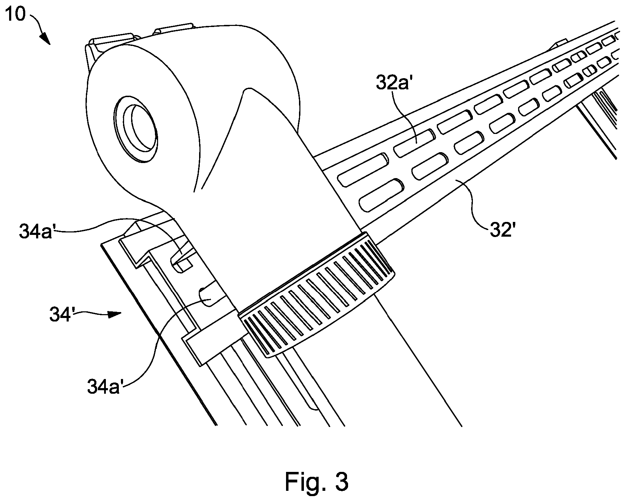

Fig. 3 illustrates an alternative arrangement of the frame member 32. In Fig. 3 the frame member 32' includes apertures 32a' in which the attachment portions 34' (and clip members 34a') fit.

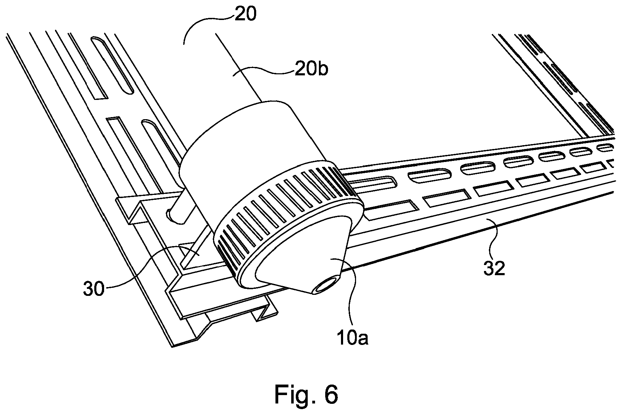

As illustrated in Fig. 6, the attachment device may further comprise one or more further attachment devices 10a, the one or more further attachment devices 10a being configured to receive and secure a lower portion 20b, opposite from its tip portion 20a, of a heat source member 20 to a structural component of the frame member 32. Each further attachment device 10a may include a frame member attachment portion 30 as described above.

In use, a user wishing to attach a heat source member 20 to a fluid conduit 16 will firstly arrange the attachment device 10 such that the first portion 12d and the second portion 12e of the housing 12 are open, such that the thermal connection member 22 is exposed. The user then sandwiches the fluid conduit 16 in the fluid conduit engagement portion 22a of the thermal connection member 22, and the tip portion 20a of a heat source member 20 in the heat source member engagement portion 22b of the thermal connection member 22. With attachment device 10 sandwiching the fluid conduit 16 and the heat source member 20, the locking member 26 is then passed over the heat source member 20 and screwed onto the threaded portion 26b of the housing 10. As the collar member 26a of the locking member 26 is tightened, a force is exerted upon the thermal connection member 22 via the resilient member 28 and the first portion and second portions 12d, 12e of the housing 12. The force exerted by the combination of these components biases the thermal connection member 22 into contact with the fluid conduit 16 and the heat source member 20.

The attachment device 10 may also be clipped to the frame member 32 via the frame member attachment portions 30. This may be carried out after the heat source member 20 is attached to the attachment device 10.

In one arrangement a number of attachment devices 10 and heat source members 20 may be attached to a frame member 32 to construct a solar panel 35 (an example of an attachment system and a heating apparatus), as illustrated in Figs. 4 and 5. The solar panel 35 may include one or more further attachment devices 10a to secure the lower portions of the heat source members 20 to the frame member 32, as described above.

The solar panel 35 may then be attached to a building and connected with the fluid conduit 16 of a fluid heating system, as described further below. It should be appreciated that the solar panel 35 may alternatively be free-standing.

In one arrangement, the frame member 32 may be mounted to an existing fluid conduit 16 of a fluid heating system and the attachment devices 10 (and heat source members 20) may be mounted to the fluid conduit 16 (and frame member 32) without disturbing the fluid conduit 16. That is, no cutting of the fluid conduit 16 is required to thermally attach the heat source member 20 to the fluid conduit 16. This offers significant advantages over known attachment devices.

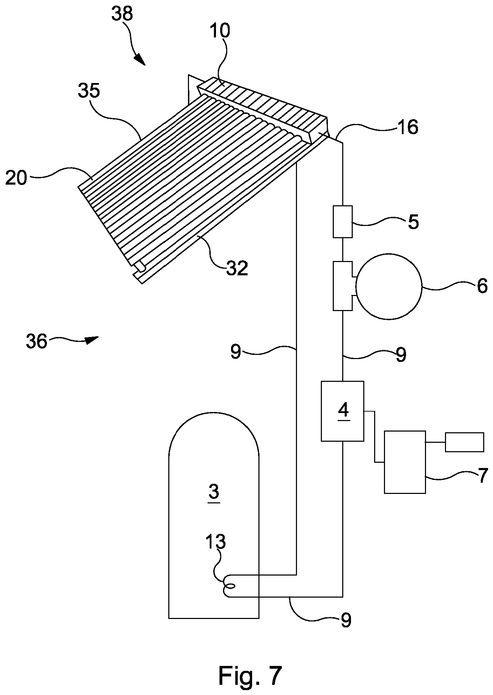

Fig. 7 is a schematic illustration of a fluid heating system 36 incorporating the attachment device 10 of the present invention (and solar panel 35). The fluid heating system 36 includes a fluid storage tank 3, a fluid pump 4, a heating apparatus 38, a fluid conduit 16, an anti-siphon valve 5, an expansion vessel 6 and a control apparatus 7.

The heating apparatus 38 includes a plurality of heat source members 20 and attachment devices 10, with each attachment device 10 being connected together and mounted on a frame member 32. This arrangement is the same as the solar panel 35.

As described above, the heat source members 20 are solar heat tubes, or vacuum tubes. Such solar heat tubes are known and the operation of which will not be described here. In use, i.e., when solar radiation is incident on the tube 20, the tip 20a of the tube 20 increases in temperature. As described above, the thermal connection members 22 of the attachment devices 10 receive the tips 20a of the tubes 20 therein. The tips 20a of the tubes 20 make contact with the heat source member engagement portion 22b. Heat from the tips 20a of the tubes 20 is transferred to the fluid conduit engagement portion 22a, which, in turn, heats fluid in the fluid conduit 16. Fluid enters the fluid conduit 16 at one end and exits at the other end.

As illustrated in figure 7, the fluid conduit 16 is fluidly connected to a pipe network 9. The pipe network 9 enters the fluid storage tank 3 and, via a heat exchanger 13, heats up the fluid therein. The pump 4, anti-siphon valve, 5 and expansion vessel 6 are all fluidly connected in series in the pipe network 9. In use, the pump 4 circulates the fluid around the pipe network 9, i.e., circulating the fluid between the heat exchanger 13 and the heating apparatus 38.

The attachment device 10 of the present invention improves the thermal connection between the heat source member 20 and the fluid conduit 16, such that the heat transfer between the heat source member 20 and the fluid conduit 16 is improved.

Modifications and improvements may be made to the above without departing from the scope of the present invention. For example, although the attachment device 10 has been illustrated and described above as including a biasing device (resilient member 28) to bias the thermal connection member 22 into engagement with the fluid conduit 16 and the heat source member 20, it should be appreciated that the attachment device 10 may not necessarily include a biasing device. Instead of using a biasing device, the housing 12 and the thermal connection member 22 may be arranged such that there is a close fit between the thermal connection member 22 and the fluid conduit 16 and the heat source member 20. This close fit arrangement would ensure that there was an improved thermal connection between the thermal connection member and the fluid conduit and the heat source member.

Also, in another embodiment the thermal connection member may be configured to be disengagable from a fluid conduit and/or a heat source member. The thermal connection member may be configured to be engagable and disengagable from a fluid conduit and/or a heat source member. The thermal connection member may be configured to be moveable between a first position in which the thermal connection member may engage and be in contact with a fluid conduit and/or a heat source member, and a second position in which the thermal connection member may be disengaged from and out of contact with a fluid conduit and/or a heat source member. The thermal connection member may be selectively engagable with a fluid conduit and/or a heat source member.

The attachment device may further comprise a thermal connection member engagement/disengagement device. The thermal connection member engagement/disengagement device may be operable to move the thermal connection member between the first position and the second position.

Operation of the thermal connection member engagement/disengagement device may be manual or automated. The thermal connection member engagement/disengagement device may be electronically controlled. The attachment device may further comprise a temperature recording device located in the vicinity of the thermal connection member. The thermal connection member engagement/disengagement device may be configured to automatically move the thermal connection member to the second position once a predetermined temperature has been recorded by the temperature recording device.

## Claims

1. An attachment device (10) for a heating apparatus (300) comprising:
a housing (12), the housing having a through bore (14), the through bore (14) being configured to allow a fluid conduit (16) to pass through the housing (12), and a heat source member receiving section (18), the heat source member receiving section (18) being configured to receive at least a portion of a heat source member (20) therein; and
a thermal connection member (22), the thermal connection member (22) being arranged such that, in use, the thermal connection member (22) is engagable with both the fluid conduit (16) passing through the housing (12) and at least a portion of the heat source member (20) located within the housing (12), wherein the housing (12) is formed from at least two pieces (12d, 12e); **characterised in that** the housing (12) includes a locking member (26) that locks each piece (12d, 12e) of the housing (12) together; and
wherein the locking member (26) is operable to bias the thermal connection member (22) into engagement with the fluid conduit (16) and/or the heat source member (20).

2. The attachment device (10) of claim 1, wherein the attachment device (10) further comprises a biasing device (28) to bias the thermal connection member (22) into engagement with the fluid conduit (16) and/or the heat source member (20).

3. The attachment device (10) of claim 1 or claim 2, wherein the at least two pieces (12d, 12e) of the housing (12) are pivotably connectable to each other.

4. The attachment device (10) of any preceding claim, wherein the locking member (26) is operable to move from a first position in which the locking member does not exert a bias or force upon the thermal connection member (22) to a second position in which the locking member (26) does exert a bias or force upon the thermal connection member (22).

5. The attachment device (10) of any preceding claim, wherein the housing (12) includes at least one housing attachment portion (34), the housing attachment portion (34) being configured to allow the housing (12) to be releasably attachable to an adjacent housing (12) of another attachment device (10).

6. The attachment device (10) of any preceding claim, wherein the thermal connection member (22) is formed from at least two pieces (22c, 22d), wherein each piece (22c, 22d) of the thermal connection member (22) is biased towards one another.

7. The attachment device (10) of claim 2, wherein the biasing device (28) includes a resilient member.

8. The attachment device (10) of any one of claims 2 to 7, wherein the biasing device (28) is located between the housing (12) and the thermal connection member (22) and is configured to exert a bias force on the thermal connection member (22) to force the thermal connection member (22) into contact with a fluid conduit (16) and/or a heat source member (20).

9. The attachment device (10) of claim 7 or claim 8, wherein the resilient member is made from a rubber material.

10. The attachment device (10) of any of claims 7 to 9, wherein the resilient member substantially surrounds the thermal connection member (22).

11. The attachment device (10) of any of claims 7 to 10, wherein the resilient member is a two-piece member and the resilient member is substantially symmetrical about a plane that lies on the longitudinal axis (12a) of the housing (12).

12. The attachment device (10) of any preceding claim, wherein the thermal connection member (22) is configured such that, in use, it may be engagable and disengagable from a fluid conduit (16) and/or a heat source member (20).

13. An attachment system (200) for a heating apparatus (300) comprising:
two or more attachment devices (10) according to claim 1.

14. A fluid heating system (36) comprising:
a fluid storage tank (3), or heat storage device;
a fluid pump (4); and
a heating apparatus (38) comprising:
an attachment system (200) comprising:
at least one attachment device (10) according to claim 1; and
a frame member (32), wherein the at least one attachment device (10) is attached to the frame
member (32);
a fluid conduit (16) located in the through bore (14) of the at least one attachment device (10); and
at least one heat source member (20), the heat source member (20) being attached to an attachment device (10),
such that in use, heat generated by the heat source member (20) is transferred to the fluid conduit (16);
wherein the fluid conduit (16) is in fluid connection with the fluid storage tank (3), or heat storage device, and
wherein the fluid pump (4) is fluidly connected between the fluid storage tank (3), or heat storage device, and the heating apparatus (38) and is operable to circulate fluid between the fluid storage tank (3), or heat storage device, and the heating apparatus (38).

15. A method of installing a fluid heating system (36) comprising the steps of:
providing a fluid storage tank (3), or a heat storage device, a fluid pump (4), and a heating apparatus (38), the heating apparatus (38) comprising:
an attachment system (200) comprising:
at least one attachment device (10) for a heating apparatus (38) comprising:
a housing (12), the housing (12) having a through bore (14), the through bore (14) being configured to allow a fluid conduit (16) to pass through the housing (12), and
a heat source member receiving section (18), the heat source member receiving section (18) being configured to receive at least a portion of a heat source member (20) therein; and
a thermal connection member (22), the thermal connection member (22) being arranged such that, in use, the thermal connection member (22) is engagable with both the fluid conduit (16) passing through the housing (12) and at least a portion of the heat source member (20) located within the housing (12);
wherein the housing (12) is formed from at least two pieces (12d, 12e) and the attachment system (200) further comprises: a frame member (32), wherein the at least one attachment device (10) is attached to the frame member (32);
a fluid conduit (16) located in the through bore (14) of the at least one attachment device (10); and
at least one heat source member (20), the heat source member (20) being attached to an attachment device (10),
such that in use, heat generated by the heat source member (20) is transferred to the fluid conduit (16);
connecting the fluid conduit (16) to the fluid storage tank (3), or heat storage device; and
connecting the fluid pump (4) between the fluid storage tank (3), or heat storage device, and the heating apparatus (38), such that the fluid pump (4) is operable to circulate fluid between the fluid storage tank (3), or heat storage device, and the heating apparatus (38); **characterised in that** the housing (12) includes a locking member (26) that locks each piece(12d, 12e) of the housing (12) together; wherein the locking member (26) is operable to bias the thermal connection member (22) into engagement with the fluid conduit (16) and/or the heat source member (20).

## Patentansprüche

1. Befestigungsvorrichtung (10) für eine Erwärmungseinrichtung (300), umfassend:
ein Gehäuse (12), wobei das Gehäuse eine Durchgangsbohrung (14) aufweist, wobei die Durchgangsbohrung (14) konfiguriert ist, um einer Fluidleitung (16) zu erlauben, das Gehäuse (12) zu durchqueren, und eine wärmequellenelementaufnehmende Sektion (18), die konfiguriert ist, um mindestens einen Abschnitt eines Wärmequellenelements (20) darin aufzunehmen; und
ein Thermalverbindungselement (22), wobei das Thermalverbindungselement (22) so angeordnet ist, dass bei Verwendung das Thermalverbindungselement (22) mit sowohl der Fluidleitung (16), die das Gehäuse (12) durchquert, als auch mindestens einem Abschnitt des Wärmequellenelements (20), das sich innerhalb des Gehäuses (12) befindet, in Eingriff gebracht werden kann, wobei das Gehäuse (12) aus mindestens zwei Teilen (12d, 12e) gebildet ist, **dadurch gekennzeichnet, dass** das Gehäuse (12) ein Verriegelungselement (26) beinhaltet, das jedes Teil (12d, 12e) des Gehäuses (12) miteinander verriegelt; und
wobei das Verriegelungselement (26) betriebsfähig ist, um das Thermalverbindungselement (22) mit der Fluidleitung (16) und/oder dem Wärmequellenelement (20) in Eingriff vorzuspannen.

2. Befestigungsvorrichtung (10) nach Anspruch 1, wobei die Befestigungsvorrichtung (10) weiter eine Vorspannvorrichtung (28) umfasst, um das Thermalverbindungselement (22) mit der Fluidleitung (16) und/oder dem Wärmequellenelement (20) in Eingriff vorzuspannen.

3. Befestigungsvorrichtung (10) nach Anspruch 1 oder Anspruch 2, wobei die mindestens zwei Teile (12d, 12e) des Gehäuses (12) schwenkbar aneinander verbindbar sind.

4. Befestigungsvorrichtung (10) nach einem vorstehenden Anspruch, wobei das Verriegelungselement (26) betriebsfähig ist, um sich von einer ersten Position, in der das Verriegelungselement keine Vorspannung oder Kraft auf das Thermalverbindungselement (22) ausübt, zu einer zweiten Position zu bewegen, in der das Verriegelungselement (26) eine Vorspannung oder Kraft auf das Thermalverbindungselement (22) ausübt.

5. Befestigungsvorrichtung (10) nach einem vorstehenden Anspruch, wobei das Gehäuse (12) mindestens einen Gehäusebefestigungsabschnitt (34) beinhaltet, wobei der Gehäusebefestigungsabschnitt (34) konfiguriert ist, um dem Gehäuse (12) zu erlauben, lösbar an einem benachbarten Gehäuse (12) einer anderen Befestigungsvorrichtung (10) befestigbar zu sein.

6. Befestigungsvorrichtung (10) nach einem vorstehenden Anspruch, wobei das Thermalverbindungselement (22) aus mindestens zwei Teilen (22c, 22d) gebildet ist, wobei jedes Teil (22c, 22d) des Thermalverbindungselements (22) in Richtung aufeinander vorgespannt ist.

7. Befestigungsvorrichtung (10) nach Anspruch 2, wobei die Vorspannvorrichtung (28) ein elastisches Element beinhaltet.

8. Befestigungsvorrichtung (10) nach einem der Ansprüche 2 bis 7, wobei die Vorspannvorrichtung (28) sich zwischen dem Gehäuse (12) und dem Thermalverbindungselement (22) befindet und konfiguriert ist, um eine Vorspannungskraft auf das Thermalverbindungselement (22) auszuüben, um das Thermalverbindungselement (22) in Kontakt mit einer Fluidleitung (16) und/oder einem Wärmequellenelement (20) zu drängen.

9. Befestigungsvorrichtung (10) nach Anspruch 7 oder Anspruch 8, wobei das elastische Element aus einem Gummimaterial hergestellt ist.

10. Befestigungsvorrichtung (10) nach einem der Ansprüche 7 bis 9, wobei das elastische Element im Wesentlichen das Thermalverbindungselement (22) umgibt.

11. Befestigungsvorrichtung (10) nach einem der Ansprüche 7 bis 10, wobei das elastische Element ein zweiteiliges Element ist und das elastische Element im Wesentlichen um eine Ebene symmetrisch ist, die auf der Längsachse (12a) des Gehäuses (12) liegt.

12. Befestigungsvorrichtung (10) nach einem vorstehenden Anspruch, wobei das Thermalverbindungselement (22) so konfiguriert ist, dass es bei Verwendung mit einer Fluidleitung (16) und/oder einem Wärmequellenelement (20) in Eingriff bringbar und außer Eingriff bringbar sein kann.

13. Befestigungssystem (200) für eine Erwärmungseinrichtung (300), umfassend:
zwei oder mehr Befestigungsvorrichtungen (10) nach Anspruch 1.

14. Fluiderwärmungssystem (36), umfassend:
einen Fluidspeichertank (3) oder eine Wärmespeichervorrichtung;
eine Fluidpumpe (4); und
eine Erwärmungseinrichtung (38), umfassend:
ein Befestigungssystem (200), umfassend:
mindestens eine Befestigungsvorrichtung (10) nach Anspruch 1; und
ein Rahmenelement (32), wobei die mindestens eine Befestigungsvorrichtung (10) an dem Rahmenelement (32) befestigt ist;
eine Fluidleitung (16), die sich in der Durchgangsbohrung (14) der mindestens einen Befestigungsvorrichtung (10) befindet; und
mindestens ein Wärmequellenelement (20), wobei das Wärmequellenelement (20) so an der Befestigungsvorrichtung (10) befestigt ist, dass bei Verwendung durch das Wärmequellenelement (20) erzeugte Wärme an die Fluidleitung (16) übertragen wird;
wobei die Fluidleitung (16) mit dem Fluidspeichertank (3) oder der Wärmespeichervorrichtung in Fluidverbindung steht, und
wobei die Fluidpumpe (4) fluidisch zwischen dem Fluidspeichertank (3) oder der Wärmespeichervorrichtung und der Erwärmungseinrichtung (38) verbunden ist und betriebsfähig ist, um Fluid zwischen dem Fluidspeichertank (3) oder der Wärmespeichervorrichtung und der Erwärmungseinrichtung (38) zu zirkulieren.

15. Verfahren zum Installieren eines Fluiderwärmungssystems (36), umfassend die Schritte des:
Bereitstellens eines Fluidspeichertanks (3) oder einer Wärmespeichervorrichtung, einer Fluidpumpe (4) und einer Erwärmungseinrichtung (38), wobei die Erwärmungseinrichtung (38) umfasst:
ein Befestigungssystem (200), umfassend:
mindestens eine Befestigungsvorrichtung (10) für eine Erwärmungseinrichtung (38), umfassend:
ein Gehäuse (12), wobei das Gehäuse eine Durchgangsbohrung (14) aufweist, wobei die Durchgangsbohrung (14) konfiguriert ist, um einer Fluidleitung (16) zu erlauben, das Gehäuse (12) zu durchqueren, und
eine wärmequellenelementaufnehmende Sektion (18), wobei die wärmequellenelementaufnehmende Sektion (18) konfiguriert ist, um mindestens einen Abschnitt eines Wärmequellenelements (20) darin aufzunehmen; und
ein Thermalverbindungselement (22), wobei das Thermalverbindungselement (22) so angeordnet ist, dass bei Verwendung das Thermalverbindungselement (22) mit sowohl der Fluidleitung (16), die das Gehäuse (12) durchquert, als auch mindestens einem Abschnitt des Wärmequellenelements (20), der sich innerhalb des Gehäuses (12) befindet, in Eingriff gebracht werden kann;
wobei
das Gehäuse (12) aus mindestens zwei Teilen (12d, 12e) gebildet ist und
das Befestigungssystem (200) weiter umfasst: ein Rahmenelement (32), wobei die mindestens eine Befestigungsvorrichtung (10) an dem Rahmenelement (32) befestigt ist;
eine Fluidleitung (16), die sich in der Durchgangsbohrung (14) der mindestens einen Befestigungsvorrichtung (10) befindet; und
mindestens ein Wärmequellenelement (20), wobei das Wärmequellenelement (20) so an der Befestigungsvorrichtung (10) befestigt ist, dass bei Verwendung durch das Wärmequellenelement (20) erzeugte Wärme an die Fluidleitung (16) übertragen wird;
Verbindens der Fluidleitung (16) mit dem Fluidspeichertank (3) oder der Wärmespeichervorrichtung; und
Verbindens der Fluidpumpe (4) zwischen dem Fluidspeichertank (3) oder der Wärmespeichervorrichtung und der Erwärmungseinrichtung (38), sodass die Fluidpumpe (4) betriebsfähig ist, um Fluid zwischen dem Fluidspeichertank (30) oder der Wärmespeichervorrichtung und der Erwärmungseinrichtung (38) zu zirkulieren; **dadurch gekennzeichnet, dass** das Gehäuse (12) ein Verriegelungselement (26) beinhaltet, das jedes Teil (12d, 12e) des Gehäuses (12) miteinander verriegelt; wobei das Verriegelungselement (26) betriebsfähig ist, um das Thermalverbindungselement (22) mit der Fluidleitung (16) und/oder dem Wärmequellenelement (20) in Eingriff vorzuspannen.

## Revendications

1. Dispositif de fixation (10) pour un appareil de chauffage (300) comprenant :
un logement (12), le logement présentant un alésage traversant (14), l'alésage traversant (14) étant configuré pour permettre à un conduit de fluide (16) de passer à travers le logement (12), et une section de réception d'organe de source de chaleur (18), la section de réception d'organe de source de chaleur (18) étant configurée pour recevoir au moins une portion d'un organe de source de chaleur (20) à l'intérieur de celle-ci ; et
un organe de connexion thermique (22), l'organe de connexion thermique (22) étant agencé de sorte que, en utilisation, l'organe de connexion thermique (22) soit engageable avec à la fois le conduit de fluide (16) passant à travers le logement (12) et au moins une portion de l'organe de source de chaleur (20) situé à l'intérieur du logement (12), dans lequel
le logement (12) est formé d'au moins deux pièces (12d, 12e) ; **caractérisé en ce que**
le logement (12) inclut un organe de verrouillage (26) qui verrouille chaque pièce (12d, 12e) du logement (12) l'une à l'autre ; et
dans lequel l'organe de verrouillage (26) est utilisable pour polariser l'organe de connexion thermique (22) en engagement avec le conduit de fluide (16) et/ou l'organe de source de chaleur (20).

2. Dispositif de fixation (10) selon la revendication 1, dans lequel le dispositif de fixation (10) comprend en outre un dispositif de polarisation (28) pour polariser l'organe de connexion thermique (22) en engagement avec le conduit de fluide (16) et/ou l'organe de source de chaleur (20).

3. Dispositif de fixation (10) selon la revendication 1 ou 2, dans lequel les au moins deux pièces (12d, 12e) du logement (12) peuvent être connectées l'une à l'autre de manière pivotante.

4. Dispositif de fixation (10) selon une quelconque revendication précédente, dans lequel l'organe de verrouillage (26) est utilisable pour se déplacer d'une première position à laquelle l'organe de verrouillage n'exerce pas de polarisation ni de force sur l'organe de connexion thermique (22) jusqu'à une seconde position à laquelle l'organe de verrouillage (26) exerce une polarisation ou une force sur l'organe de connexion thermique (22).

5. Dispositif de fixation (10) selon une quelconque revendication précédente, dans lequel le logement (12) inclut au moins une portion de fixation de logement (34), la portion de fixation de logement (34) étant configurée pour permettre au logement (12) de pouvoir être fixé de manière amovible à un logement (12) adjacent d'un autre dispositif de fixation (10).

6. Dispositif de fixation (10) selon une quelconque revendication précédente, dans lequel l'organe de connexion thermique (22) est formé à partir d'au moins deux pièces (22c, 22d), dans lequel chaque pièce (22c, 22d) de l'organe de connexion thermique (22) est polarisée l'une vers l'autre.

7. Dispositif de fixation (10) selon la revendication 2, dans lequel le dispositif de polarisation (28) inclut un organe élastique.

8. Dispositif de fixation (10) selon l'une quelconque des revendications 2 à 7, dans lequel le dispositif de polarisation (28) est situé entre le logement (12) et l'organe de connexion thermique (22) et est configuré pour exercer une force de polarisation sur l'organe de connexion thermique (22) pour forcer l'organe de connexion thermique (22) à venir au contact d'un conduit de fluide (16) et/ou d'un organe de source de chaleur (20).

9. Dispositif de fixation (10) selon la revendication 7 ou 8, dans lequel l'organe élastique est fait d'un matériau en caoutchouc.

10. Dispositif de fixation (10) selon l'une quelconque des revendications 7 à 9, dans lequel l'organe élastique entoure sensiblement l'organe de connexion thermique (22).

11. Dispositif de fixation (10) selon l'une quelconque des revendications 7 à 10, dans lequel l'organe élastique est un organe à deux pièces et l'organe élastique est sensiblement symétrique par rapport à un plan qui se trouve sur l'axe longitudinal (12a) du logement (12).

12. Dispositif de fixation (10) selon une quelconque revendication précédente, dans lequel l'organe de connexion thermique (22) est configuré de sorte que, en utilisation, il puisse être engagé et désengagé d'un conduit de fluide (16) et/ou d'un organe de source de chaleur (20).

13. Système de fixation (200) pour un appareil de chauffage (300) comprenant :
deux dispositifs de fixation (10) ou plus selon la revendication 1.

14. Système de chauffage de fluide (36) comprenant :
un réservoir de stockage de fluide (3), ou un dispositif de stockage de chaleur ;
une pompe à fluide (4) ; et
un appareil de chauffage (38) comprenant :
un système de fixation (200) comprenant :
au moins un dispositif de fixation (10) selon la revendication 1 ; et
un organe de cadre (32), dans lequel l'au moins un dispositif de fixation (10) est fixé à l'organe de cadre (32) ;
un conduit de fluide (16) situé dans l'alésage traversant (14) de l'au moins un dispositif de fixation (10) ; et
au moins un organe de source de chaleur (20), l'organe de source de chaleur (20) étant fixé à un dispositif de fixation (10) de sorte que, en utilisation, une chaleur générée par l'organe de source de chaleur (20) soit transférée au conduit de fluide (16) ;
dans lequel le conduit de fluide (16) est en connexion fluidique avec le réservoir de stockage de fluide (3), ou dispositif de stockage de chaleur, et
dans lequel la pompe à fluide (4) est connectée fluidiquement entre le réservoir de stockage de fluide (3), ou dispositif de stockage de chaleur, et l'appareil de chauffage (38) et est utilisable pour faire circuler un fluide entre le réservoir de stockage de fluide (3), ou dispositif de stockage de chaleur, et l'appareil de chauffage (38).

15. Procédé d'installation d'un système de chauffage de fluide (36) comprenant les étapes de :
fourniture d'un réservoir de stockage de fluide (3), ou d'un dispositif de stockage de chaleur, d'une pompe à fluide (4), et d'un appareil de chauffage (38), l'appareil de chauffage (38) comprenant :
un système de fixation (200) comprenant :
au moins un dispositif de fixation (10) pour un appareil de chauffage (38) comprenant :
un logement (12), le logement (12) présentant un alésage traversant (14), l'alésage traversant (14) étant configuré pour permettre à un conduit de fluide (16) de passer à travers le logement (12), et
une section de réception d'organe de source de chaleur (18), la section de réception d'organe de source de chaleur (18) étant configurée pour recevoir au moins une portion d'un organe de source de chaleur (20) à l'intérieur de celle-ci ; et
un organe de connexion thermique (22), l'organe de connexion thermique (22) étant agencé de sorte que, en utilisation, l'organe de connexion thermique (22) soit engageable avec à la fois le conduit de fluide (16) passant à travers le logement (12) et au moins une portion de l'organe de source de chaleur (20) située à l'intérieur du logement (12) ;
dans lequel
le logement (12) est formé à partir d'au moins deux pièces (12d, 12e) et
le système de fixation (200) comprend en outre : un organe de cadre (32), dans lequel l'au moins un dispositif de fixation (10) est fixé à l'organe de cadre (32) ;
un conduit de fluide (16) situé dans l'alésage traversant (14) de l'au moins un dispositif de fixation (10) ; et
au moins un organe de source de chaleur (20), l'organe de source de chaleur (20) étant fixé à un dispositif de fixation (10) de sorte que, en utilisation, une chaleur générée par l'organe de source de chaleur (20) soit transférée au conduit de fluide (16) ;
connexion du conduit de fluide (16) au réservoir de stockage de fluide (3) ou au dispositif de stockage de chaleur ; et
connexion de la pompe à fluide (4) entre le réservoir de stockage de fluide (3) ou le dispositif de stockage de chaleur et l'appareil de chauffage (38), de sorte que la pompe à fluide (4) soit utilisable pour faire circuler un fluide entre le réservoir de stockage de fluide (3) ou le dispositif de stockage de chaleur et l'appareil de chauffage (38) ; **caractérisé en ce que** le logement (12) inclut un organe de verrouillage (26) qui verrouille chaque pièce (12d, 12e) du logement (12) l'une à l'autre; dans lequel l'organe de verrouillage (26) est utilisable pour polariser l'organe de connexion thermique (22) en engagement avec le conduit de fluide (16) et/ou l'organe de source de chaleur (20).
